# EUROPEAN PATENT SPECIFICATION

(11) **EP 4 470 898 B1**
(45) Date of publication and mention of the grant of the patent: **13.05.2026**
(21) Application number: 24178797.7
(22) Date of filing: 29.05.2024
(51) Int. Cl.: B62M 6/50, B62M 6/65, B62J 45/411, B62J 45/423, B62J 11/19, B62M 11/16, H02K 7/116, H02K 5/22, H02K 7/14, H02K 11/24, B60B 27/00, B60B 27/02, B60B 27/04

(54) **MOTOR AND ELECTRIC BICYCLE**
MOTOR UND ELEKTROFAHRRAD
MOTEUR ET BICYCLETTE ÉLECTRIQUE

(30) Priority: 02.06.2023 JP 2023091953
(43) Date of publication of application: 04.12.2024
(73) Proprietor: Nidec Corporation, Kyoto-shi, Kyoto 601-8205 (JP)
(72) Inventor: TAKAHASHI, Ryosuke, Kyoto, 601-8205 (JP); OYAMA, Seiichi, Kyoto, 601-8205 (JP)
(74) Representative: Viering, Jentschura & Partner mbB Patent- und Rechtsanwälte

(56) References cited:
- CN-A- 102 983 671
- CN-A- 106 100 218
- CN-U- 201 450 400
- CN-U- 207 766 108
- CN-U- 214 648 833
- CN-U- 217 533 141
- US-A1- 2019 185 106

## Description

### Technical Field

The present invention relates to a motor and an electric bicycle.

### Background Art

In recent years, pedelecs have been rapidly spreading. The pedelec can reduce the driver's pedaling force by using the power of an electric motor as auxiliary power (see, for example, Patent Literature 1).

Patent Literature 1 describes a freehub torque speed sensing device that can accumulate a torque sensor in a freehub of an electric bicycle or a bicycle. In the freehub torque speed sensing device of Patent Literature 1, a freehub body is provided with a torque sensing deformation unit, whereby the completed vehicle can be more conveniently assembled.

### Citation List

### Patent Literature

Patent Literature 1: JP 2022-517380 A
CN 207 766 108 U discloses a motor hub structure including a hub motor, a flywheel seat disposed on the main shaft of the hub motor, and a flywheel disposed on the flywheel base. In particular, said CN 207 766 108 U discloses a motor for assisting driving of an electric bicycle, said motor comprising:
a rotor having a rotor shaft extending along a virtual central axis, the rotor rotating about the rotor shaft;
a stator positioned radially outside with respect to the rotor;
a hub that accommodates the rotor and the stator and rotates with rotation of the rotor;
a torque sensor positioned on an axial one side with respect to the rotor;
a circuit board accommodated in the hub and positioned between the rotor and the torque sensor;
a sensor wire electrically connecting the torque sensor and the circuit board;
a signal wire electrically connected to an external circuit on a surface on an axial one side of the circuit board; and
a first fixed shaft that is a stationary member and is positioned on an axial one side with respect to the rotor shaft, wherein the first fixed shaft supports the torque sensor.

### Summary of Invention

### Technical Problem

In the freehub torque speed sensing device described in Patent Literature 1, a lead wire extends from an axis opposite to a torque sensor and a sprocket. For this reason, the lead wire extending from the torque sensor to the outside may become long.

The present invention has been made in view of the above problems, and an object of the present invention is to provide a motor and an electric bicycle that can simplify routing of a lead wire.

### Solution to Problem

According to the present invention, a motor defined in claim 1 is provided. Exemplary embodiments are defined in the dependent claims.

An exemplary electric bicycle according to the present invention includes: the motor described above; a front wheel; and a rear wheel that rotates with rotation of the motor.

Another exemplary electric bicycle according to the present invention includes: the motor described above; a front wheel; a rear wheel that rotates with rotation of the motor; and a sprocket attached to the rear wheel, wherein the sprocket faces the first fixed shaft.

### Advantageous Effects of Invention

According to the exemplary present invention, it is possible to provide a motor in which a torque sensor is integrated with a rotor and a stator.

### Brief Description of Drawings

Fig. 1 is a cross-sectional view illustrating a structure of a motor according to an embodiment of the present invention.
Fig. 2 is a perspective view of the motor according to the embodiment of the present invention.
Fig. 3 is an exploded perspective view of the motor according to the embodiment of the present invention.
Fig. 4A is a partially enlarged view of Fig. 3.
Fig. 4B is a partially enlarged view of Fig. 3.
Fig. 5 is a perspective view of a rotor in the motor according to the embodiment of the present invention.
Fig. 6 is an exploded perspective view of a torque sensor, a first fixed shaft, the rotor, the stator, a first stator cover, a body portion, and a circuit board in the motor according to the embodiment of the present invention.
Fig. 7 is an exploded perspective view of the torque sensor, the first fixed shaft, the rotor, the stator, the first stator cover, the body portion, and the circuit board in the motor according to the embodiment of the present invention.
Fig. 8 is a schematic perspective view of the stator in the motor according to the embodiment of the present invention.
Fig. 9 is a schematic view of an electric bicycle including the motor according to the embodiment of the present invention.
Fig. 10 is a schematic perspective view illustrating a part of the electric bicycle including the motor according to the embodiment of the present invention.

### Description of Embodiments

Hereinafter, an exemplary embodiment of the present invention will be described with reference to the drawings. In the drawings, the identical or corresponding parts will be denoted by the identical reference signs and description of such parts will not be repeated.

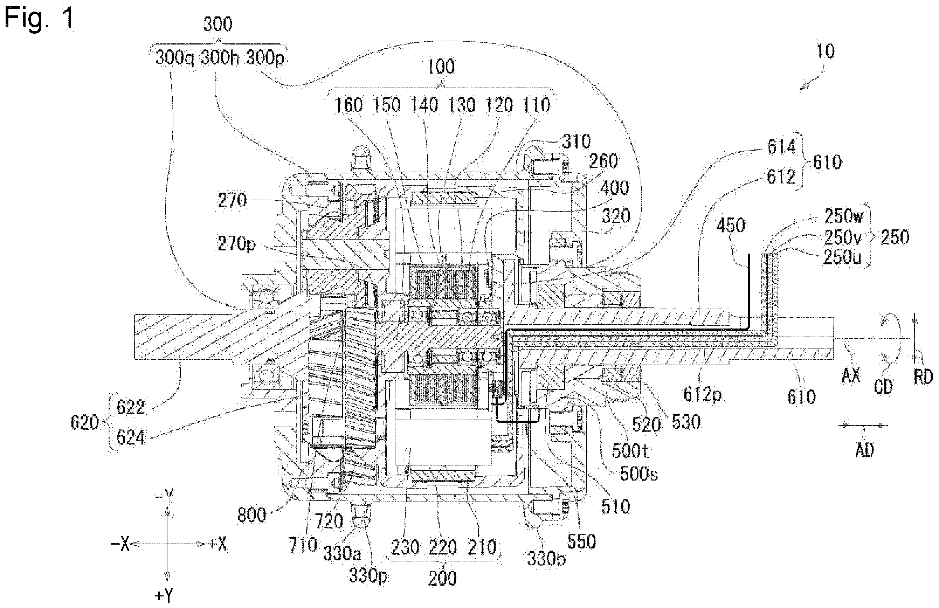

In the present description, for convenience, there is a case where the direction of a rotation axis AX (see Fig. 1) of the motor is described as a horizontal direction. In the drawings, an X axis, a Y axis, and a Z axis of a three-dimensional orthogonal coordinate system are appropriately described for easy understanding. In one example, the positive direction of the Z axis indicates an upward direction, and the negative direction of the Z axis indicates a downward direction. However, an up-down direction, the upward direction, and the downward direction are defined for convenience of description, and do not need to coincide with the vertical direction. The up-down direction is merely defined for convenience of description, and the orientation at the time of use and at the time of assembly of the motor according to the present invention is not limited. Furthermore, a direction parallel to the rotation axis AX of the motor is simply described as "axial direction AD", and a radial direction and a circumferential direction about the rotation axis AX of the motor are simply described "radial direction RD" and "circumferential direction CD". In addition, "plan view" indicates viewing a target object from the axial direction AD. A "parallel direction" in the present description includes a substantially parallel direction.

In the present description, the rotation axis AX of the motor coincides with the rotation axis of the rotor in some cases, but the rotation axis AX of the motor needs not coincide with the rotation axis of the rotor. When the rotation axis AX of the motor does not coincide with the rotation axis of the rotor, the rotor may rotate about a virtual central axis different from the rotation axis AX of the motor.

In the present description, a direction along the rotation axis AX of the motor or the rotation axis of the rotor may be described as the axial direction. Therefore, in the present description, the axial direction indicates a direction along the rotation axis AX serving as the rotation center of the motor or the rotation axis serving as the rotation center of the rotor.

First, a motor 10 according to an embodiment of the present invention will be described with reference to Fig. 1. Fig. 1 is a cross-sectional view illustrating the structure of the motor 10 according to the embodiment of the present invention.

As illustrated in Fig. 1, the motor 10 includes a rotor 100, a stator 200, a hub 300, a circuit board 400, a signal wire 450, a torque sensor 500, a sensor wire 550, a first fixed shaft 610, a second fixed shaft 620, a sun gear 710, a planetary gear 720, and an internal gear 800.

The rotor 100 is disposed about the rotation axis AX extending in the axial direction AD. The rotor 100 rotates about the rotation axis AX. For example, the rotor 100 has a substantially columnar shape.

The rotor 100 rotates about the rotation axis AX with respect to the stator 200. The rotor 100 is disposed radially inside the stator 200. Such rotor 100 is also called an inner rotor. Since the rotor 100 is positioned radially inside with respect to the stator 200, the rotor 100 becomes smaller in size than a case of being an outer rotor, and the moment of inertia can be reduced, and therefore the responsiveness of force is excellent. Since the rotor 100 rotates stably, power can be efficiently transmitted.

The stator 200 has a tubular shape. The stator 200 surrounds the radial outside of the rotor 100.

The motor 10 is driven by alternating-current power of three phases (U phase, V phase, and W phase) output from the three output terminals of a control device. When U phase power, V phase power, and W phase power are input to the stator 200, the rotor 100 rotates with a change in the magnetic field caused in the stator 200.

The hub 300 has a tubular shape. The hub 300 surrounds the radial outside of the stator 200. The hub 300 surrounds at least a part of each of the rotor 100 and the stator 200 from axial both sides.

The hub 300 accommodates the rotor 100, the stator 200, the circuit board 400, the sun gear 710, the planetary gear 720, and the internal gear 800. The hub 300 accommodates at least a part of each of the torque sensor 500, the first fixed shaft 610, and the second fixed shaft 620.

The hub 300 is provided with two openings. One opening of the hub 300 is positioned on an axial one side. The other opening of the hub 300 is positioned on the axial other side.

The hub 300 rotates with rotation of the rotor 100. Typically, the rotation speed of the hub 300 is smaller than the rotation speed of the rotor 100.

The hub 300 includes a housing portion 300h, an opening 300p, and an opening 300q. The housing portion 300h is a container having two opposing bottom surfaces and side surfaces. The opening 300p and the opening 300q are provided on the bottom surface of the housing portion 300h.

The opening 300p is positioned on an axial one side of the housing portion 300h. The torque sensor 500 and the first fixed shaft 610 penetrate the opening 300p.

The opening 300q is positioned on the axial other side of the housing portion 300h. The second fixed shaft 620 penetrates the opening 300q.

Here, the hub 300 includes a body portion 310 and a lid portion 320. The body portion 310 is a container in which an axial one side is opened. The body portion 310 is positioned on the axial other side with respect to the lid portion 320. In the body portion 310, the surface on the axial other side is provided with an opening penetrating in the axial direction AD. The opening of the body portion 310 is the opening 300q.

The lid portion 320 is positioned on an axial one side with respect to the body portion 310. The lid portion 320 covers the axial one side of the body portion 310. The lid portion 320 is provided with an opening penetrating in the axial direction AD. The opening of the lid portion 320 is the opening 300p.

An outer peripheral surface of the hub 300 is provided with protrusion portions 330a and 330b protruding radially outward. The protrusion portion 330a and the protrusion portion 330b extend in the circumferential direction CD on the outer peripheral surface of the hub 300. On the outer peripheral surface of the hub 300, the protrusion portion 330a and the protrusion portion 330b are positioned apart at a predetermined interval. Typically, the protrusion portion 330a and the protrusion portion 330b are provided on an outer peripheral surface of the body portion 310, and the protrusion portion 330a is positioned on the axial other side relative to the protrusion portion 330b. The protrusion portion 330b is positioned at an axial one side end part of the outer peripheral surface of the body portion 310.

The protrusion portion 330a and the protrusion portion 330b are provided with through holes 330p at equal intervals. The through hole 330p is used for fixing a rotation target object to the hub 300. For example, when the motor 10 is mounted on a hub of a wheel of a bicycle, the through hole 330p on the outer peripheral surface of the hub 300 is attached with a tip end of a spoke of the wheel of the bicycle.

The circuit board 400 is accommodated in the hub 300. For example, the circuit board 400 has a substantially circular shape. The circuit board 400 is substantially orthogonal to the axial direction AD. The circuit board 400 faces in the axial direction AD at least a part of the rotor 100 and is disposed substantially horizontally. The circuit board 400 needs not have a substantially circular shape. For example, the circuit board 400 may have a circular half shape.

The circuit board 400 is positioned on an axial one side with respect to the rotor 100. The circuit board 400 is positioned between the rotor 100 and the torque sensor 500.

For example, the circuit board 400 includes a printed board on which a wire is printed. The circuit board 400 is mounted with various electronic components.

The signal wire 450 is connected to the circuit board 400. The signal wire 450 includes one or more lead wires. The signal wire 450 is connected to the circuit board 400 on the surface on the axial one side of the circuit board 400. The signal wire 450 transmits a signal acquired or generated in the circuit board 400.

The torque sensor 500 has a tubular shape. The torque sensor 500 is positioned on an axial one side with respect to the rotor 100.

The torque sensor 500 is attached with the first fixed shaft 610 and the hub 300. The first fixed shaft 610 penetrates radial inside of the torque sensor 500. The hub 300 is disposed radial outside the torque sensor 500.

The torque sensor 500 includes an inner component 500s and an outer component 500t. The outer component 500t is positioned radially outside with respect to the inner component 500s. The inner component 500s faces the first fixed shaft 610. The inner component 500s is fixed to the hub 300. The inner component 500s rotates together with the hub 300.

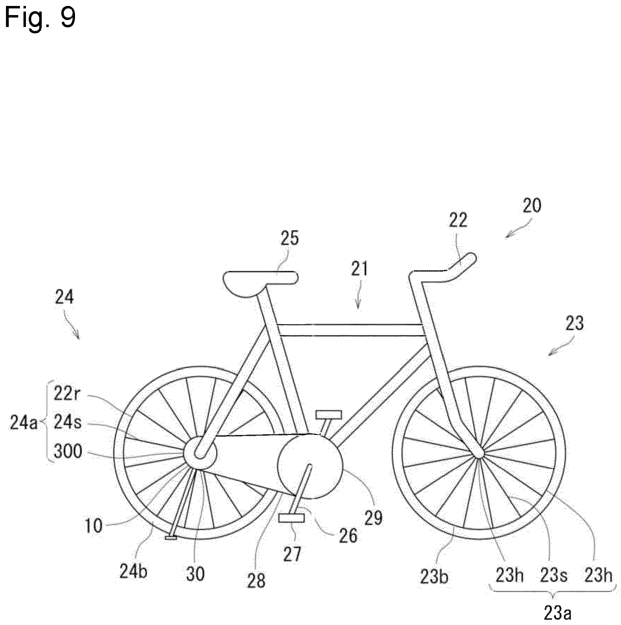

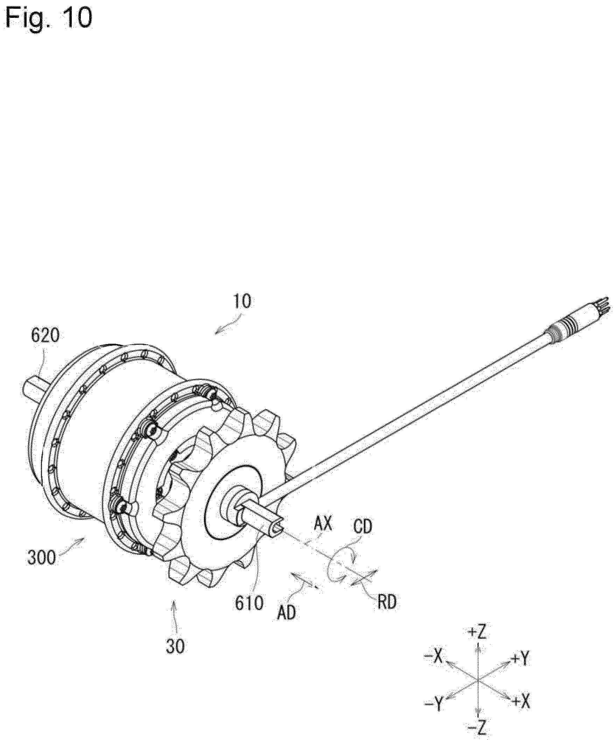

The outer component 500t is attached to a rotation member. The outer component 500t rotates together with the rotation member. For example, the outer component 500t is fixed to a sprocket 30 (Fig. 9 and Fig. 10) as a rotation member. In this case, the outer component 500t rotates together with the sprocket 30. A part of a radially outer surface of the inner component 500s and a part of a radially inner surface of the outer component 500t are connected via a one-way clutch not illustrated. Due to this, the rotational force of the hub 300 is transmitted to the outer component 500t via the inner component 500s, and the force is transmitted to the sprocket 30 fixed to the outer component 500t.

The torque sensor 500 detects, by a change in inductance, strain between the hub 300 and the sprocket 30 by the inner component 500s rotating together with the hub 300 and the outer component 500t rotating together with the sprocket 30.

The motor 10 further includes a bearing 510, a bearing 520, and a bearing 530. The bearing 520 is positioned on an axial one side with respect to the bearing 510. The bearing 530 is positioned on an axial one side with respect to the bearing 520.

The bearing 510 is positioned between the torque sensor 500 and the first fixed shaft 610. Specifically, the bearing 510 is positioned between the inner component 500s and the first fixed shaft 610. The bearing 510 is, for example, a rolling bearing. The bearing 510 is positioned radially inside the inner component 500s and positioned radially outside the first fixed shaft 610. The bearing 510 rotatably supports the inner component 500s with respect to the first fixed shaft 610.

The bearing 520 is positioned between the inner component 500s and the outer component 500t. The bearing 520 is, for example, a rolling bearing. The bearing 520 is positioned radially inside the outer component 500t and positioned radially outside the inner component 500s. The bearing 520 rotatably supports the outer component 500t with respect to the inner component 500s.

The bearing 530 is positioned between the torque sensor 500 and the first fixed shaft 610. Specifically, the bearing 530 is positioned between the outer component 500t and the first fixed shaft 610. The bearing 530 is, for example, a rolling bearing. The bearing 530 is positioned radially inside the outer component 500t and positioned radially outside the first fixed shaft 610. The bearing 530 rotatably supports the outer component 500t with respect to the first fixed shaft 610.

The sensor wire 550 electrically connects the torque sensor 500 and the circuit board 400. The sensor wire 550 includes one or more lead wires. One end of the sensor wire 550 is connected to the torque sensor 500 in the hub 300. The other end of the sensor wire 550 is connected to the circuit board 400 in the hub 300.

The first fixed shaft 610 is positioned on an axial one side with respect to the rotor 100. The first fixed shaft 610 is attached with the torque sensor 500. The first fixed shaft 610 penetrates the torque sensor 500 along the axial direction AD. The first fixed shaft 610 extends to an axial one side from the hub 300. The first fixed shaft 610 is a stationary member.

The second fixed shaft 620 is positioned on the axial other side with respect to the rotor 100. The second fixed shaft 620 extends to the axial other side from the hub 300. The second fixed shaft 620 is a stationary member.

The rotor 100 includes a rotor core 110 and a magnet 120. The magnet 120 is, for example, a permanent magnet. For example, the rotor 100 may have a singularity of magnet 120 having a substantially circular shape, or may have a plurality of magnets 120 arrayed in the circumferential direction CD. The "substantially circular shape" is, for example, a "substantially annular shape". For example, the number of poles of the magnet 120 is "14". However, the number of poles of the magnet 120 is not limited to this.

The rotor core 110 has a substantially cylindrical shape. The rotor core 110 includes a laminated steel plate in which, for example, electromagnetic steel plates are laminated in the axial direction AD. The laminated steel plate is an example of lamination.

The plurality of magnets 120 are disposed radially outside the rotor core 110. In the present embodiment, the motor 10 is a surface permanent magnet (SPM) motor. However, the rotor 100 may be a spoke type rotor. The motor 10 may be an interior permanent magnet (IPM) motor.

The rotor 100 may further include a magnet covering portion 130. The magnet covering portion 130 covers at least a part of each of the rotor core 110 and the magnet 120. The magnet covering portion 130 covers a part of the rotor core 110 and the magnet 120 from axial both sides. The magnet covering portion 130 covers the rotor core 110 and the magnet 120 from radial outside. The magnet covering portion 130 can suppress the magnet 120 from separating from the rotor core 110.

The rotor 100 further includes a bearing 140. The bearing 140 rotatably supports a rotor shaft 160. The bearing 140 is, for example, a rolling bearing. The bearing 140 is positioned radially inside the rotor core 110 and positioned radially outside the rotor shaft 160.

The rotor 100 further includes a one-way clutch 150. The one-way clutch 150 is positioned radially inside the rotor core 110 and positioned radially outside the rotor shaft 160.

The rotor 100 further includes the rotor shaft 160. The rotor shaft 160 is disposed radially inside the rotor core 110. The rotor shaft 160 rotates together with the rotor core 110 and the magnet 120. The rotor shaft 160 rotates together with the rotor core 110 and the magnet 120 on a circumferential one side by the one-way clutch 150, but does not rotate together with the rotor core 110 and the magnet 120 on the circumferential other side.

The stator 200 has a substantially cylindrical shape. The stator 200 is disposed about the rotation axis AX extending in the axial direction AD. The stator 200 is disposed radially outside the rotor 100. The stator 200 faces the magnet 120 in the radial direction RD.

The stator 200 includes a stator core 210, an insulator 220, and a coil 230. The stator core 210 is disposed about the rotation axis AX extending in the axial direction AD. As an example, the stator core 210 has a substantially circular shape about the rotation axis AX. The "substantially circular shape" is, for example, a "substantially annular shape". The stator core 210 includes a laminated steel plate in which, for example, thin electromagnetic steel plates are laminated in the axial direction AD. The laminated steel plate is an example of lamination. The stator core 210 includes a core back and teeth.

The insulator 220 covers at least a part of the stator core 210. As an example, the insulator 220 surrounds the stator core 210 from axial both sides. The insulator 220 has a substantially circular shape. The "substantially circular shape" is, for example, a "substantially annular shape". The insulator 220 is an electrical insulator. The insulator 220 electrically insulates the stator core 210 from the coil 230. The insulator 220 may include a single member or may include a plurality of separate members. For example, the insulator 220 is a resin molded article into which the stator core 210 is inserted. The insulator 220 may have a structure to be separately attached to the stator core 210.

The coil 230 is wound around the stator core 210 via the insulator 220. The coil 230 is a coated conductive wire in which a metal wire is covered with a coating film. The material of the metal wire is, for example, copper. However, the material of the metal wire may be aluminum in place of copper. The coating film covering the metal wire is, for example, an insulating resin.

The motor 10 further includes a first stator cover 260 and a second stator cover 270. The first stator cover 260 is disposed on an axial one side (+X direction) of the stator 200. The first stator cover 260 covers at least a part of the stator 200 from an axial one side.

The second stator cover 270 is disposed on the axial other side (-X direction) of the stator 200. The second stator cover 270 covers the stator 200 from the axial other side.

At least a part of an end part of radially outside of the stator core 210 directly faces the hub 300 without being covered by the first stator cover 260 and the second stator cover 270. This eliminated the need for covering the outside of the stator 200 with a separate member, and therefore can reduce the weight of the motor 10.

An end part of radially outside of the first stator cover 260 faces the stator 200 in the axial direction AD. An end part of radially outside of the second stator cover 270 faces the stator 200 in the axial direction AD.

The rotor 100 and the stator 200 are disposed in a space formed by the first stator cover 260 and the second stator cover 270. The circuit board 400 is disposed in a space formed by the first stator cover 260 and the second stator cover 270. The circuit board 400 is fixed to the first stator cover 260.

An end part of an axial one side of the rotor shaft 160 is positioned in a through hole 260p extending in the axial direction AD at the radial center of the first stator cover 260. The rotor shaft 160 penetrates a through hole 270p extending in the axial direction AD at the radial center of the second stator cover 270 on the axial other side.

The sun gear 710 is positioned at a tip end of the rotor shaft 160. The sun gear 710 is positioned at a tip end on the axial other side with respect to the rotor shaft 160. The sun gear 710 rotates together with the rotor shaft 160.

The planetary gear 720 is positioned radially outside the sun gear 710. The planetary gear 720 meshes with the sun gear 710. The planetary gear 720 rotates in conjunction with the sun gear 710. The planetary gear 720 is supported by the second stator cover 270.

The sensor wire 550 electrically connects the torque sensor 500 and the circuit board 400. Through the sensor wire 550, a signal detected by the torque sensor 500 is transmitted to the circuit board 400.

The signal wire 450 is connected to the circuit board 400. The signal wire 450 transmits a signal acquired in the circuit board 400. For example, the signal wire 450 transmits, from the circuit board 400 to an external circuit, a signal detected in the circuit board 400.

The signal wire 450 transmits, from the circuit board 400 to an external circuit, a signal detected by the torque sensor 500 and transmitted to the circuit board 400.

The motor 10 further includes a control wire 250. The control wire 250 electrically connects the stator 200 and the control device. The control wire 250 includes one or more lead wires. The rotor 100 rotates with respect to the stator 200 by a control signal transmitted through the control wire 250.

The motor 10 is driven by alternating-current power of three phases output from the three output terminals of the control device. The motor 10 is driven by the U phase power, the V phase power, and the W phase power. For example, the control device changes the control current to be supplied to the stator 200 based on a detection result of the torque sensor 500. This can control rotation of the rotor 100.

Through the control wire 250, control signals of three phases (U phase, V phase, and W phase) output from the three output terminals of the control device are transmitted. Typically, the control wire 250 has three or more lead wires. In this case, the control wire 250 transmits power of the U phase, the V phase, and the W phase. For example, the control wire 250 includes a wire 250u that transmits the U phase power, a wire 250v that transmits the V phase power, and a wire 250w that transmits the W phase power.

The first fixed shaft 610 includes a tube portion 612 and a base portion 614. The tube portion 612 has a tubular shape extending in the axial direction AD. The base portion 614 has a plate shape extending radially outward from the radial center. The tube portion 612 extends to an axial one side from the base portion 614.

The length along the axial direction AD of the base portion 614 is smaller than the length along the axial direction AD of the tube portion 612. An outer diameter along the radial direction RD of the base portion 614 is larger than an outer diameter along the radial direction RD of the tube portion 612. The tube portion 612 is provided with a through hole 612p extending in the axial direction AD.

The signal wire 450 penetrates the tube portion 612 in the axial direction AD. The control wire 250 penetrates the tube portion 612 in the axial direction AD. This reduces a part where the signal wire 450 is exposed to the outside, and therefore can suppress damage or the like of the signal wire 450.

The second fixed shaft 620 includes a projection portion 622 and a base portion 624. The projection portion 622 has a rod shape extending in the axial direction AD. The base portion 624 has a plate shape extending radially outward from the radial center. The projection portion 622 extends to the axial other side from the base portion 624.

The length along the axial direction AD of the base portion 624 is smaller than the length along the axial direction AD of the projection portion 622. An outer diameter along the radial direction RD of the base portion 624 is larger than an outer diameter along the radial direction RD of the projection portion 622.

The motor 10 further includes the internal gear 800. The internal gear 800 is accommodated in the hub 300. The internal gear 800 is fixed to an inner peripheral surface of the hub 300. Specifically, the internal gear 800 is attached to the body portion 310 of the hub 300. The internal gear 800 has a circular shape. The internal gear 800 has a flat outer peripheral surface and an inner peripheral surface provided with a gear.

The internal gear 800 is positioned radially outside the planetary gear 720. The internal gear 800 meshes with the planetary gear 720. The internal gear 800 rotates together with the planetary gear 720.

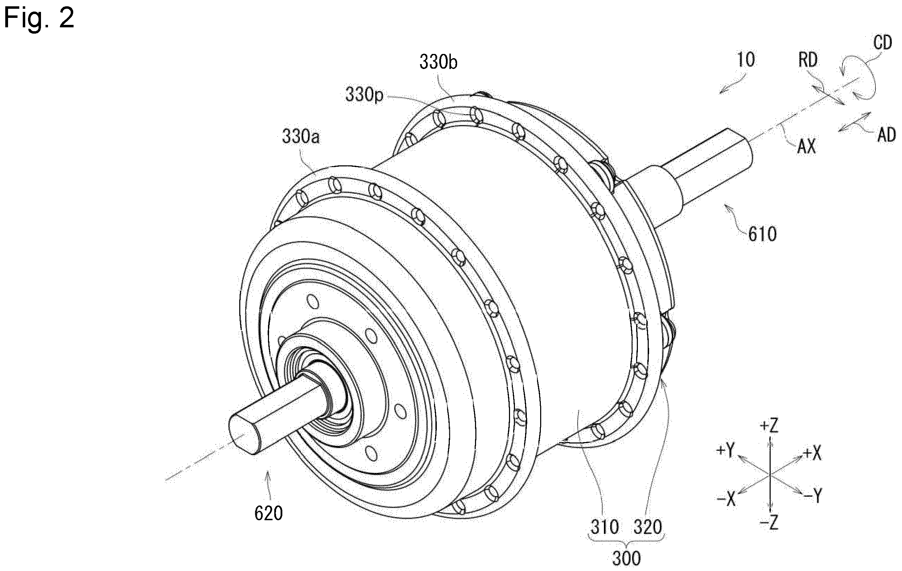

Next, the motor 10 of the present embodiment will be described with reference to Figs. 1 and 2. Fig. 2 is a perspective view of the motor 10 according to the embodiment of the present invention.

As illustrated in Fig. 2, in the motor 10, the hub 300, the first fixed shaft 610, and the second fixed shaft 620 are exposed to the outside. The first fixed shaft 610 extends from the hub 300 in an axial one side (+X direction) along the rotation axis AX. The second fixed shaft 620 extends from the hub 300 in the axial other side (-X direction) along the rotation axis AX.

The first fixed shaft 610 and the second fixed shaft 620 extend linearly along the rotation axis AX from the hub 300. The length of the first fixed shaft 610 is different from the length of the second fixed shaft 620. Here, the length of the first fixed shaft 610 is larger than the length of the second fixed shaft 620. This can easily attach the torque sensor 500 to the first fixed shaft 610. The length of the second fixed shaft 620 may be larger than the length of the first fixed shaft 610.

The hub 300 includes the body portion 310 and the lid portion 320. The body portion 310 is a container in which an axial one side is opened. In the body portion 310, the surface on the axial other side is provided with an opening at the center. The lid portion 320 is positioned on an axial one side with respect to the body portion 310. The lid portion 320 covers an opening positioned on an axial one side of the body portion 310.

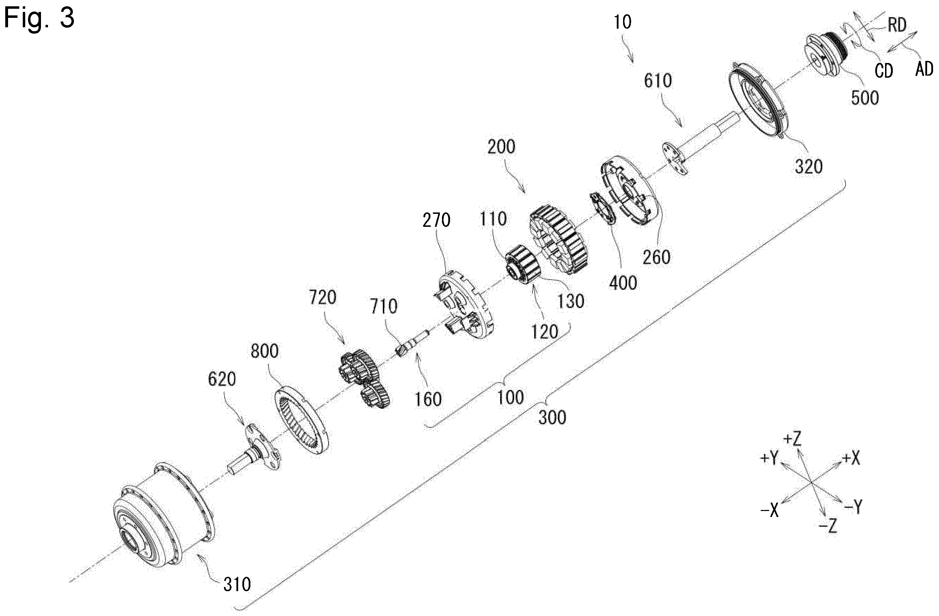

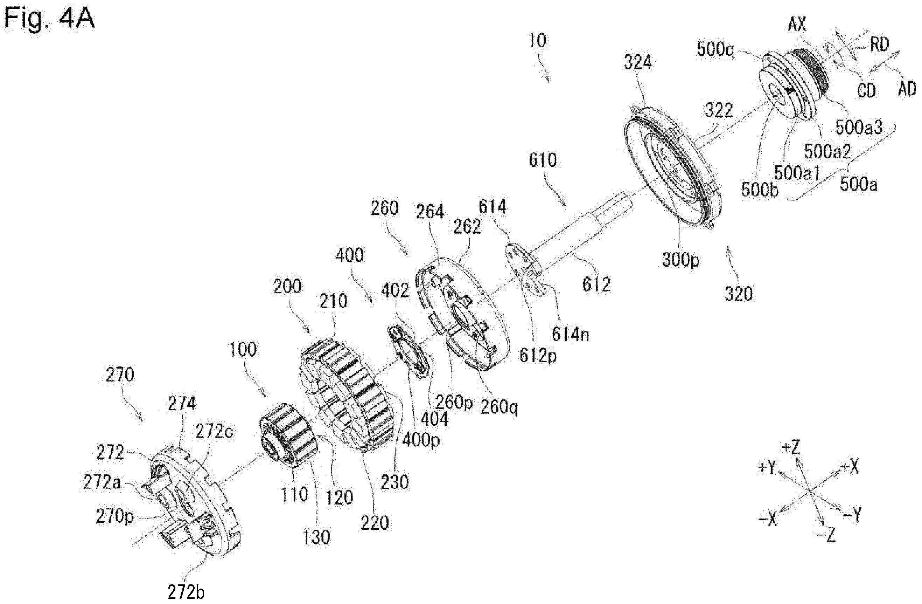

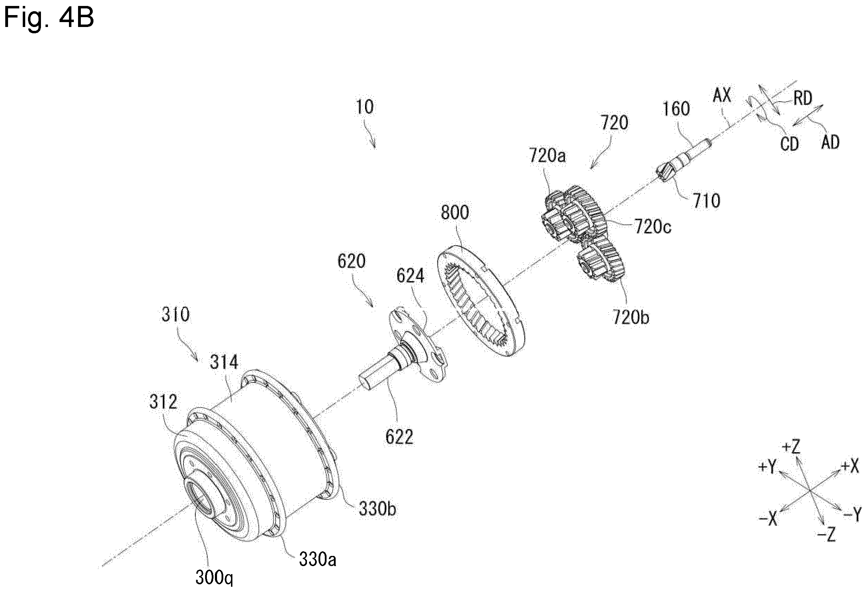

Next, the motor 10 of the present embodiment will be described with reference to Figs. 1 to 4B. Fig. 3 is an exploded perspective view of the motor 10 according to the embodiment of the present invention. Figs. 4A and 4B are partially enlarged views of Fig. 3. Fig. 4A illustrates the configuration on an axial one side of the motor 10, and Fig. 4B illustrates the configuration on the axial other side of the motor 10. In Figs. 3 to 4B, the torque sensor wire, the signal wire, and the control wire are omitted in order to avoid the drawing from being excessively complicated.

As illustrated in Figs. 3 to 4B, the motor 10 includes the rotor 100, the stator 200, the first stator cover 260, the second stator cover 270, the hub 300, the circuit board 400, the torque sensor 500, the first fixed shaft 610, the second fixed shaft 620, the sun gear 710, the planetary gear 720, and the internal gear 800. The hub 300 includes the body portion 310 and the lid portion 320. The rotor 100 includes the rotor core 110, the magnet 120, the magnet covering portion 130, and the rotor shaft 160.

The torque sensor 500 is positioned on an axial one side with respect to the lid portion 320. The torque sensor 500 is positioned on an axial one side with respect to the circuit board 400. The torque sensor 500 is fixed to the lid portion 320 at a position apart by a predetermined distance from the circuit board 400.

The torque sensor 500 has a substantially cylindrical shape. The torque sensor 500 has an outer peripheral surface 500a and an inner peripheral surface 500b. The outer peripheral surface 500a includes a first portion 500a1, a second portion 500a2, and a third portion 500a3. The first portion 500a1, the second portion 500a2, and the third portion 500a3 are positioned in order from the axial other side to the axial one side.

The outer diameter of the second portion 500a2 is larger than the outer diameter of the first portion 500a1. The outer diameter of the second portion 500a2 is larger than the outer diameter of the third portion 500a3.

The second portion 500a2 is provided with a through hole 500q extending in the axial direction AD. With a fixing tool penetrating the through hole 500q of the second portion 500a2, the torque sensor 500 can be fixed to the lid portion 320.

In the torque sensor 500, the outer diameter of the outer peripheral surface 500a changes along the axial direction AD. On the other hand, the inner diameter of the inner peripheral surface 500b is substantially constant along the axial direction AD.

The lid portion 320 is positioned between the torque sensor 500 and the first stator cover 260 in the axial direction AD.

The lid portion 320 includes a plate portion 322 provided with a through hole at the center and a side portion 324 extending from an outer edge of the plate portion 322 to the axial other side. The through hole of the plate portion 322 is the opening 300p. The torque sensor 500 penetrates the opening 300p.

The torque sensor 500 is attached to the first fixed shaft 610. The first fixed shaft 610 penetrates the torque sensor 500. Therefore, the first fixed shaft 610 penetrates the opening 300p of the lid portion 320.

The first fixed shaft 610 includes a tube portion 612 and a base portion 614. The tube portion 612 has a tubular shape extending in the axial direction AD. The tube portion 612 extends to an axial one side from the base portion 614. The tube portion 612 is provided with the through hole 612p extending in the axial direction AD. The base portion 614 has a plate shape extending radially outward from the radial center. The outer diameter along the radial direction RD of the base portion 614 is larger than the outer diameter along the radial direction RD of the tube portion 612. The base portion 614 is attached to the first stator cover 260 with a screw. The base portion 614 may be attached to the first stator cover 260 with an adhesive. Alternatively, the base portion 614 may be a single member with first stator cover 260.

The base portion 614 is provided with a cutout 614n in which a part of a disk shape is cut out. The cutout 614n is continuous with the through hole 612p. The control wire 250 and the signal wire 450 (see Fig. 1) are arranged in the cutout 614n. This can easily arrange the control wire 250 and the signal wire 450.

For example, the cutout 614n is cut out at an angle of 90° or less among the angle of 360° in the circumferential direction CD about the rotation axis AX. This can stably attach the base portion 614 to the first stator cover 260.

The first stator cover 260 is positioned on the axial other side of the lid portion 320. An outer diameter along the radial direction RD of the first stator cover 260 is smaller than an inner diameter along the radial direction RD of the lid portion 320. The outer diameter along the radial direction RD of the first stator cover 260 is smaller than an inner diameter along the radial direction RD of the body portion 310. Therefore, the first stator cover 260 is accommodated in the hub 300 in which the body portion 310 and the lid portion 320 are combined.

The first stator cover 260 is positioned on the axial other side of the first fixed shaft 610. An outer diameter along the radial direction RD of the first stator cover 260 is larger than an outer diameter along the radial direction RD of the base portion 614. The first fixed shaft 610 is fixed to a surface on an axial one side of the first stator cover 260.

The first stator cover 260 covers the stator 200 from an axial one side. The first stator cover 260 includes a plate-shaped portion 262 and a side surface portion 264. The plate-shaped portion 262 has a disk shape provided with the through hole 260p at the center. The side surface portion 264 extends to the axial other side from the outer edge of the plate-shaped portion 262.

The plate-shaped portion 262 is provided with the through hole 260p extending in the axial direction AD. An end part of an axial one side of the rotor 100 is inserted into the through hole 260p. The plate-shaped portion 262 is provided with a through hole 260q extending in the axial direction AD separately from the through hole 260p. The through hole 260q is not continuous with the through hole 260p. The control wire 250, the sensor wire 550, and the signal wire 450 (see Fig. 1) penetrate the through hole 260q. This can easily arrange the control wire 250, the sensor wire 550, and the signal wire 450 (see Fig. 1).

The circuit board 400 is positioned on the axial other side with respect to the first stator cover 260. The circuit board 400 has a substantially circular shape.

The circuit board 400 includes a printed board 402 having a substantially circular shape and a detection element 404 mounted on the printed board 402. The circuit board 400 is positioned between the rotor 100 and the first stator cover 260.

For example, the detection element 404 includes a Hall element. The Hall element detects rotation of the rotor 100 by detecting the magnetic field of the rotor 100.

The detection element 404 may include a temperature detection element. The temperature detection element detects a temperature in the hub 300.

The stator 200 is positioned on the axial other side with respect to the first stator cover 260. The stator 200 has a substantially cylindrical shape. The stator 200 is disposed about the rotation axis AX extending in the axial direction AD. The stator 200 is disposed radially outside the rotor 100. The stator 200 is positioned on an axial one side of the second stator cover 270.

The stator 200 includes a stator core 210, an insulator 220, and a coil 230. The stator core 210 is disposed about the rotation axis AX extending in the axial direction AD. The insulator 220 covers at least a part of the stator core 210. As an example, the insulator 220 surrounds the stator core 210 from axial both sides. The coil 230 is wound around the stator core 210 via the insulator 220.

The rotor 100 is positioned on the axial other side with respect to the circuit board 400. The rotor 100 is disposed about the rotation axis AX extending in the axial direction AD. The rotor 100 rotates about the rotation axis AX. The rotor 100 is disposed radially inside the stator 200.

The rotor 100 includes the rotor core 110, the magnet 120, the magnet covering portion 130, and the rotor shaft 160. The rotor core 110 has a substantially cylindrical shape. The rotor core 110 includes a laminated steel plate in which, for example, electromagnetic steel plates are laminated in the axial direction AD. The magnet 120 is disposed radially outside the rotor core 110.

The magnet covering portion 130 covers at least a part of each of the rotor core 110 and the magnet 120. The magnet covering portion 130 covers a part of the rotor core 110 and the magnet 120 from axial both sides. The magnet covering portion 130 covers the rotor core 110 and the magnet 120 from radial outside.

The rotor shaft 160 is positioned radially inside the rotor core 110. The rotor shaft 160 rotates together with the rotor core 110 and the magnet 120.

The second stator cover 270 is positioned on the axial other side of the rotor 100. An outer diameter along the radial direction RD of the second stator cover 270 is smaller than the inner diameter along the radial direction RD of the body portion 310. Therefore, the second stator cover 270 is accommodated in the hub 300 in which the body portion 310 and the lid portion 320 are combined.

The second stator cover 270 is positioned on the axial other side of the rotor 100 and the stator 200. The second stator cover 270 covers the stator 200 from the axial other side.

The second stator cover 270 includes a plate-shaped portion 272 and a side surface portion 274. The plate-shaped portion 272 has a disk shape provided with the through hole 270p at the center. The side surface portion 274 extends to an axial one side from the outer edge of the plate-shaped portion 272.

The plate-shaped portion 272 is provided with the through hole 270p extending in the axial direction AD. An end part of the axial other side of the rotor 100 penetrates the through hole 270p.

The surface on the axial other side of the plate-shaped portion 272 is provided with projection portions 272a, 272b, and 272c projecting to the axial other side. The projection portions 272a, 272b, and 272c are attached with a gear shaft not illustrated, and the planetary gear 720 is attached to the gear shaft.

The rotor shaft 160 penetrates the second stator cover 270. The tip end on the axial other side of the rotor shaft 160 penetrates the through hole 270p. The sun gear 710 is positioned at the tip end on the axial other side of the rotor shaft 160. The sun gear 710 is positioned on the axial other side with respect to the second stator cover 270. The sun gear 710 rotates together with the rotor shaft 160.

The planetary gear 720 is positioned on the axial other side with respect to the second stator cover 270. The planetary gear 720 is positioned radially outside the sun gear 710. The planetary gear 720 meshes with the sun gear 710 and rotates with rotation of the rotor 100.

The planetary gear 720 includes a first planetary gear 720a, a second planetary gear 720b, and a third planetary gear 720c arranged at equal intervals about the rotation axis AX. The first planetary gear 720a, the second planetary gear 720b, and the third planetary gear 720c are attached to the projection portions 272a, 272b, and 272c of the plate-shaped portion 272. The first planetary gear 720a, the second planetary gear 720b, and the third planetary gear 720c mesh with the sun gear 710 and rotate with rotation of the rotor 100.

The internal gear 800 is positioned on the axial other side with respect to the second stator cover 270. The internal gear 800 is positioned radially outside with respect to the planetary gear 720. The internal gear 800 has a cylindrical shape.

The inner peripheral surface of the internal gear 800 is provided with teeth. The internal gear 800 is positioned at an end part of the axial other side of the body portion 310. The internal gear 800 is attached to the body portion 310. The internal gear 800 meshes with the planetary gear 720. The internal gear 800 meshes with the planetary gears 720 and rotates with the rotation of the rotor 100.

The second fixed shaft 620 is positioned on the axial other side with respect to the second stator cover 270. The second fixed shaft 620 is attached to the second stator cover 270 with a screw. The second fixed shaft 620 may be attached to the second stator cover 270 with an adhesive. Alternatively, the second fixed shaft 620 may include a single member with the second stator cover 270.

The second fixed shaft 620 includes a projection portion 622 and a base portion 624. The projection portion 622 has a tubular shape extending in the axial direction AD. The projection portion 622 extends to the axial other side from the base portion 624. The base portion 624 has a plate shape extending radially outward from the radial center. The length along the axial direction AD of the base portion 624 is smaller than the length along the axial direction AD of the projection portion 622. The outer diameter along the radial direction RD of the base portion 624 is larger than the outer diameter along the radial direction RD of the projection portion 622. The second fixed shaft 620 penetrates the body portion 310. The second fixed shaft 620 penetrates the opening 300q of the body portion 310.

The body portion 310 is positioned on the axial other side with respect to the lid portion 320. The body portion 310 includes a bottom portion 312 provided with a through hole at the center and a side portion 314 extending from an outer edge of the bottom portion 312 to an axial one side. The through hole of the bottom portion 312 is the opening 300q.

According to the present embodiment, the motor 10 includes the rotor 100, the stator 200, the hub 300, the circuit board 400, the signal wire 450, the torque sensor 500, the sensor wire 550, and the first fixed shaft 610. The rotor 100 has the rotor shaft 160 extending along a virtual central axis. The rotor 100 rotates about the rotor shaft 160.

The stator 200 is positioned radially outside with respect to the rotor 100. The hub 300 accommodates the rotor 100 and the stator 200. The hub 300 rotates with rotation of the rotor 100.

The torque sensor 500 is positioned on an axial one side with respect to the rotor 100.

The circuit board 400 is accommodated in the hub 300. The circuit board 400 is positioned between the rotor 100 and the torque sensor 500.

The sensor wire 550 electrically connects the torque sensor 500 and the circuit board 400. The signal wire 450 is electrically connected to an external circuit on the surface on an axial one side of the circuit board 400.

The first fixed shaft 610 is a stationary member. The first fixed shaft 610 is positioned on an axial one side with respect to the rotor shaft 160. The first fixed shaft 610 supports the torque sensor 500.

According to the present embodiment, since the circuit board 400 is positioned between the rotor 100 and the torque sensor 500 positioned on an axial one side with respect to the rotor 100, the sensor wire 550 and the signal wire 450 can be collectively arranged on one side with respect to the rotor 100, and therefore the sensor wire 550 and the signal wire 450 can be suppressed from coming into contact with the rotor 100. The sensor wire 550 and the signal wire 450 can be easily attached to the circuit board 400, and a signal detected by the torque sensor 500 can be easily output to the outside. Furthermore, since the rotor 100 is an inner rotor, high output can be obtained with low vibration even if the motor 10 is small.

The motor 10 further includes the first stator cover 260 that covers an axial one side of the stator 200 and the second stator cover 270 that covers the axial other side of the stator 200. The circuit board 400 is positioned between the rotor 100 and the first stator cover 260. The first stator cover 260 is provided with the through hole 260q through which the sensor wire 550 and the signal wire 450 penetrate in the axial direction AD. This can easily attach the sensor wire 550 and the signal wire 450 to the circuit board 400.

At least a part of the first fixed shaft 610 extends to an axial one side from the hub 300. The first fixed shaft 610 is attached with the torque sensor 500. The first fixed shaft 610 includes the tube portion 612 in which the signal wire 450 is internally disposed. Due to this, since the signal wire 450 is arranged inside the tube portion 612 of the first fixed shaft 610 attached with the torque sensor 500, the signal wire 450 can be suppressed from being exposed to the outside.

The first fixed shaft 610 further includes the base portion 614 coupled to the tube portion 612. The base portion 614 is attached to the first stator cover 260. The base portion 614 is provided with the cutout 614n continuous with the through hole 612p of the tube portion 612. This can easily attach the sensor wire 550 and the signal wire 450 to the circuit board 400.

The motor 10 further includes the second fixed shaft 620 positioned on the axial other side with respect to the rotor shaft 160. At least a part of the second fixed shaft 620 extends to the axial other side from the hub 300. This can arrange the first fixed shaft 610 and the second fixed shaft 620 symmetrically with respect to the hub 300.

The motor 10 further includes the control wire 250 through which the stator 200 is supplied with a control current. The first fixed shaft 610 includes the tube portion 612 in which the control wire 250 is internally disposed. This can change the control current supplied to the stator 200 based on a detection result of the torque sensor 500, and can control rotation of the rotor 100. Since the control wire 250 is disposed inside the tube portion 612 of the first fixed shaft 610, the control wire 250 can be suppressed from being exposed to the outside.

The motor 10 further includes the sun gear 710 and the planetary gear 720. The sun gear 710 is attached to the axial other side with respect to the rotor shaft 160. The planetary gear 720 further includes the planetary gear 720 that meshes with the sun gear 710 and is disposed on the axial other side with respect to the rotor 100. This can suppress the sensor wire 550 and the signal wire 450 from coming into contact with the sun gear 710 and the planetary gear 720.

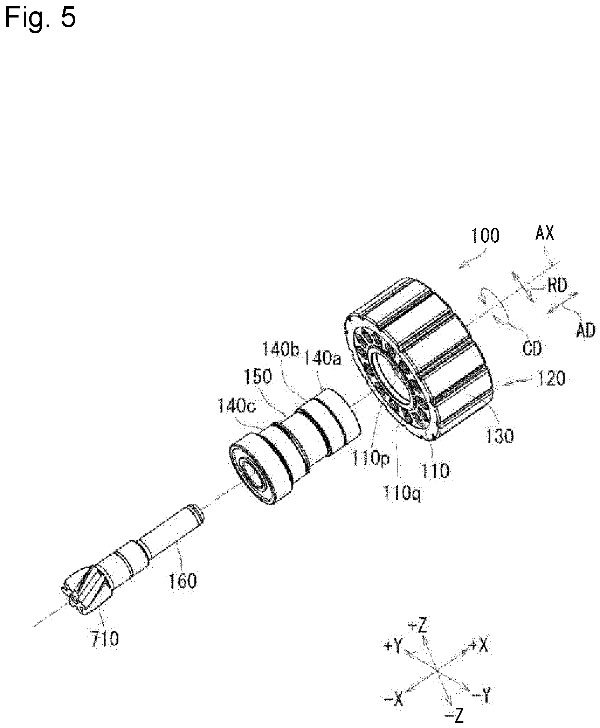

Next, the motor 10 of the present embodiment will be described with reference to Figs. 1 to 5. Fig. 5 is an exploded perspective view of the rotor 100 in the motor 10 according to the embodiment of the present invention. In Fig. 5, an end part of the axial other side of the rotor shaft 160 is attached with the sun gear 710.

As illustrated in Fig. 5, the rotor 100 includes the rotor core 110, the magnet 120, the magnet covering portion 130, the bearing 140, the one-way clutch 150, and the rotor shaft 160. The rotor core 110 has a cylindrical shape. The rotor core 110 is provided with a through hole 110p extending in the axial direction AD at the radial center. The rotor core 110 is provided with a plurality of through holes 110q extending in the axial direction AD radially outside the through hole 110p. The plurality of through holes 110q are arranged at equal intervals along the circumferential direction CD. Here, the number of the plurality of through holes 110q is 14. The rotor shaft 160 is positioned radially inside the rotor core 110.

The bearing 140 rotatably supports a rotor shaft 160. The bearing 140 is, for example, a rolling bearing. The bearing 140 is positioned radially inside the rotor core 110 and positioned radially outside the rotor shaft 160.

Here, the bearing 140 includes a bearing 140a, a bearing 140b, and a bearing 140c. The bearing 140a, the bearing 140b, and the bearing 140c are arranged in order from an axial one side to the axial other side.

The one-way clutch 150 is positioned radially inside the rotor core 110 and positioned radially outside the rotor shaft 160. Here, the one-way clutch 150 is positioned between the bearing 140b and the bearing 140c in the axial direction AD.

The one-way clutch 150 transmits, to the rotor shaft 160, rotation of only a circumferential one side of the rotor core 110 and the magnet 120. Specifically, the one-way clutch 150 transmits, to the rotor shaft 160, rotation to a circumferential one side of the rotor core 110 and the magnet 120, and does not transmit, to the rotor shaft 160, rotation to the circumferential other side of the rotor core 110 and the magnet 120.

In the present embodiment, the motor 10 further includes the one-way clutch 150 attached to the rotor shaft 160. This can reduce the size of the one-way clutch 150, and therefore can reduce the size and weight of the motor 10.

As described above, in the motor 10 of the present embodiment, the control wire 250, the signal wire 450, and the sensor wire 550 are arranged on the axial one side with respect to the rotor 100.

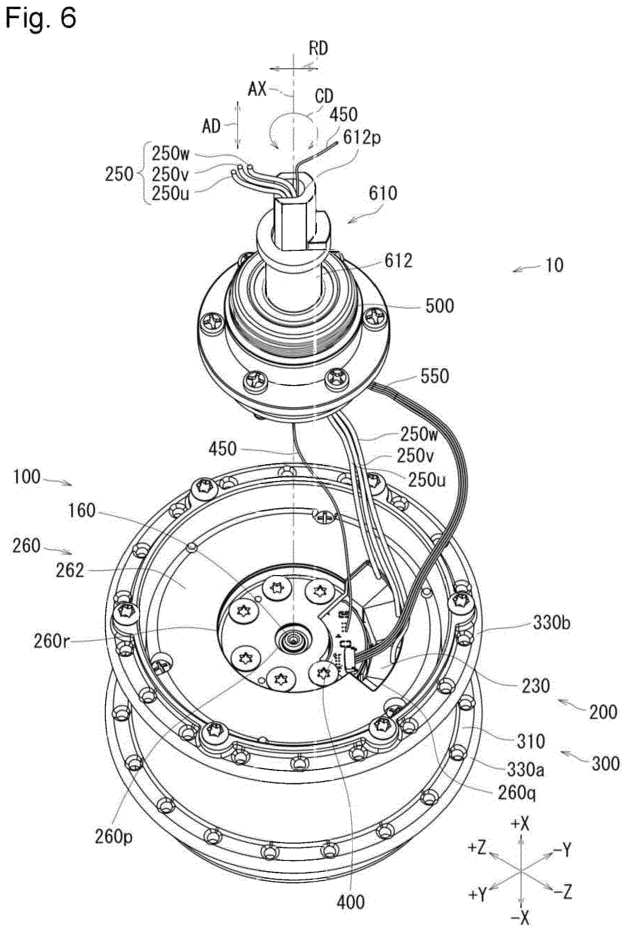

Next, the motor 10 of the present embodiment will be described with reference to Figs. 1 to 6. Fig. 6 is an exploded perspective view of the torque sensor 500, the first fixed shaft 610, the rotor 100, the stator 200, the first stator cover 260, the body portion 310, and the circuit board 400 in the motor 10 according to the embodiment of the present invention. In Fig. 6, the lid portion 320 of the hub 300 is omitted in order to avoid the drawing from being excessively complicated.

As illustrated in Fig. 6, the first fixed shaft 610 penetrates the torque sensor 500. The tube portion 612 of the first fixed shaft 610 penetrates the through hole of the torque sensor 500.

The body portion 310 of the hub 300 accommodates the rotor 100, the stator 200, the first stator cover 260, and the circuit board 400. The first stator cover 260 is positioned on an axial one side with respect to the rotor 100 and the stator 200.

In the first stator cover 260, the plate-shaped portion 262 is positioned on an axial one side. The surface on an axial one side of the plate-shaped portion 262 is provided with a recess 260r and the through hole 260q. An outer edge of the recess 260r has a substantially circular shape in which a part is cut out. The plate-shaped portion 262 is provided with the through hole 260q penetrating in the axial direction AD.

The plate-shaped portion 262 of the first stator cover 260 is provided with the recess 260r extending in the axial direction AD. The torque sensor 500 is fitted into the recess 260r. An inner diameter along the radial direction RD of the recess 260r is substantially equal to an outer diameter along the radial direction RD of the first portion 500a1 (Fig. 4A) of the torque sensor 500.

The circuit board 400 faces the coil 230 of the stator 200 in the radial direction RD. This can shorten the length in the axial direction AD of the motor 10, and thus can downsize the motor 10. The circuit board 400 is disposed radially inside relative to the coil 230. However, the circuit board 400 may be disposed at a position overlapping the coil 230 in the axial direction AD.

The stator 200 and the circuit board 400 are positioned on the axial other side with respect to the plate-shaped portion 262 of the first stator cover 260, and parts of the stator 200 and the circuit board 400 are exposed by the through hole 260q. Here, the inner diameter along the radial direction RD of the recess 260r is substantially equal to an outer diameter along the radial direction RD of the circuit board 400.

The first stator cover 260 is provided with the through hole 260p extending in the axial direction AD at the radial center. The end part of an axial one side of the rotor shaft 160 is exposed by the through hole 260p.

In the motor 10 of the present embodiment, the control wire 250, the signal wire 450, and the sensor wire 550 extend to an axial one side from the surface on the axial one side with respect to the rotor 100 in the body portion 310.

The control wire 250 is connected to the stator 200. The control wire 250 is connected to one end of the coil 230 of the stator 200. The control wire 250 includes the wires 250u, 250v, and 250w for supplying the control currents of the U phase, the V phase, and the W phase.

The control wire 250 passes through the through hole 612p of the tube portion 612 via the cutout 614n (Figs. 3 and 4A) of the first fixed shaft 610 from the stator 200 exposed by the through hole 260q of the first stator cover 260.

The signal wire 450 electrically connects the circuit board 400 and the external circuit. The signal wire 450 electrically connects the surface on the axial one side of the circuit board 400 and the external circuit.

The signal wire 450 passes through the through hole 612p of the tube portion 612 via the cutout 614n (Figs. 3 and 4A) of the first fixed shaft 610 from the circuit board 400 exposed by the through hole 260q of the first stator cover 260.

The sensor wire 550 electrically connects the torque sensor 500 and the circuit board 400. One end of the sensor wire 550 is connected to the torque sensor 500 in the hub 300. The other end of the sensor wire 550 is connected to the circuit board 400 in the hub 300.

The sensor wire 550 connects the circuit board 400 exposed by the through hole 260q of the first stator cover 260 and the torque sensor 500.

In the motor 10 illustrated in Figs. 1 to 6, the sensor wire 550 has one or more lead wires, but the present embodiment is not limited to this. The sensor wire 550 may include a connector in addition to the one or more lead wires.

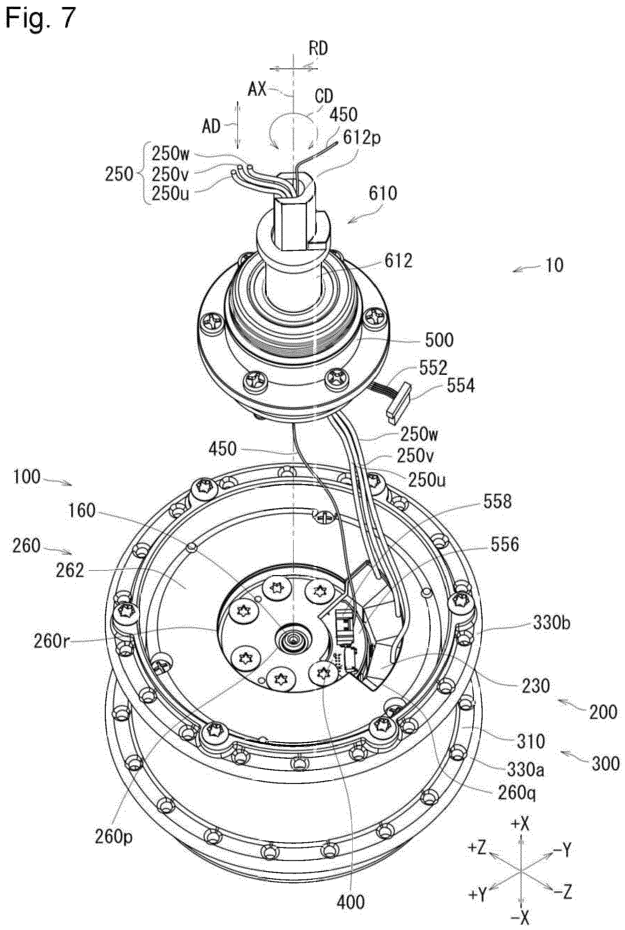

Next, the motor 10 of the present embodiment will be described with reference to Figs. 1 to 7. Fig. 7 is an exploded perspective view of the torque sensor 500, the first fixed shaft 610, the rotor 100, the stator 200, the first stator cover 260, the body portion 310, and the circuit board 400 in the motor 10 according to the embodiment of the present invention. The exploded perspective view of Fig. 7 has the same configuration as that of the exploded perspective view of Fig. 6 except that the sensor wire 550 connecting the torque sensor 500 and the circuit board 400 has a connector, and redundant description is omitted in order to avoid redundancy.

As illustrated in Fig. 7, the first fixed shaft 610 penetrates the torque sensor 500. The tube portion 612 of the first fixed shaft 610 penetrates the through hole of the torque sensor 500.

The sensor wire 550 electrically connects the torque sensor 500 and the circuit board 400. One end of the sensor wire 550 is connected to the torque sensor 500 in the hub 300. The other end of the sensor wire 550 is connected to the circuit board 400 in the hub 300.

The sensor wire 550 includes a sensor connection line 552, a first connector 554, a board connection line 556, and a second connector 558. The sensor connection line 552 is connected to the torque sensor 500. Typically, the sensor connection line 552 extends from the axial other side of the outer peripheral surface of the torque sensor 500.

The first connector 554 is connected to the sensor connection line 552. The first connector 554 is attached to an end part of the sensor connection line 552.

The board connection line 556 is connected to the circuit board 400. The board connection line 556 is connected to the surface on an axial one side of the circuit board 400.

The second connector 558 is connected to the board connection line 556. The second connector 558 is attached to an end part of the board connection line 556. The second connector 558 can be connected to the first connector 554. By fitting the first connector 554 into the second connector 558, it is possible to connect the second connector 558 to the first connector 554. This can easily connect the first connector 554 to the second connector 558.

For example, an insertion port of the second connector 558 may face radially outward. This can more easily connect the first connector 554 to the second connector 558.

In the motor 10 of the present embodiment, the sensor wire 550 includes a sensor connection line 552 connected to the torque sensor 500, a first connector 554 positioned at a tip end of the sensor connection line 552, a board connection line 556 connected to the circuit board 400, and a second connector 558 positioned at a tip end of the board connection line 556 and connected to the first connector 554. By connecting the first connector 554 to the second connector 558, it is possible to electrically connect the torque sensor 500 to the circuit board 400.

In the above description with reference to Figs. 1 to 7, in the stator 200, the stator core 210 is covered with the insulating insulator 220 while the coil 230 is exposed. However, according to the claimed invention, the coil 230 is covered with an insulating member taking the form of a covering portion 240 as described below.

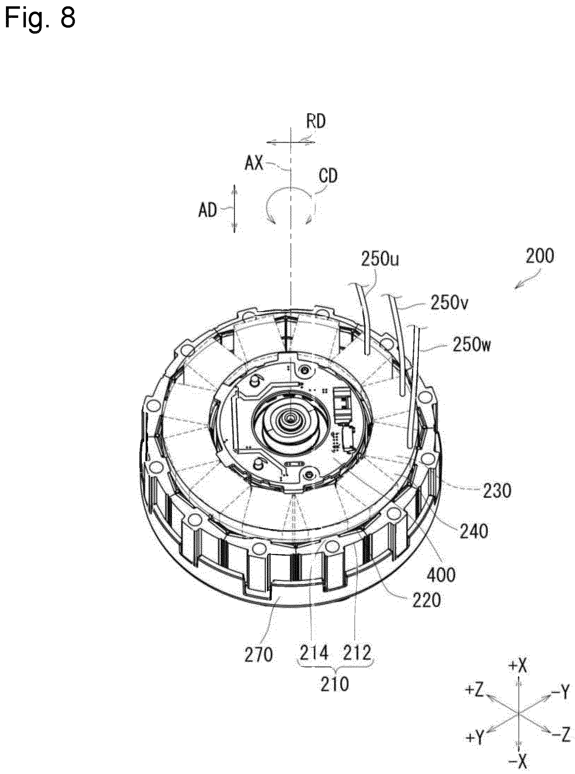

Next, the motor 10 of the present embodiment will be described with reference to Figs. 1 to 8. Fig. 8 is a schematic perspective view of the stator 200, the second stator cover 270, and the circuit board 400 in the motor 10 according to the embodiment of the present invention.

As illustrated in Fig. 8, the stator 200 includes the stator core 210, the insulator 220, and the coil 230. The stator core 210 is disposed about the rotation axis AX extending in the axial direction AD. The stator core 210 includes a core back 212 and teeth 214.

The insulator 220 covers at least a part of the stator core 210. As an example, the insulator 220 covers the stator core 210 from axial both sides.

The stator 200 further includes a covering portion 240. The covering portion 240 covers the coil 230. For example, the covering portion 240 covers the coil 230 from axial both sides. The covering portion 240 may cover the coil 230 from radial both sides. The covering portion 240 includes an insulating resin.

The wires 250u, 250v, and 250w are connected to the coil 230. By the coil 230 being covered with the covering portion 240, it is possible to suppress shaking of the coil 230 when the rotor 100 rotates. Since a winding wire of the coil 230 can be fixed by covering the coil 230 with the covering portion 240, it becomes less likely to receive vibration of the motor 10, and generation of vibration and sound can be suppressed.

In the motor 10 of the present embodiment, the stator 200 includes the stator core 210, the insulator 220, the coil 230, and the covering portion 240 covering the coil 230. The insulator 220 covers the stator core 210. The coil 230 is wound around the insulator 220. The covering portion 240 covers the coil 230. This can suppress vibration of the motor 10.

Next, an electric bicycle 20 mounted with the motor 10 of the present embodiment will be described with reference to Figs. 1 to 10. Fig. 9 is a schematic view of the electric bicycle 20 including the motor 10 according to the embodiment of the present invention. Fig. 10 is a schematic perspective view illustrating a part of the electric bicycle 20 including the motor 10 according to the embodiment of the present invention.

As illustrated in Fig. 9, the motor 10 is mounted on the electric bicycle 20. For example, the motor 10 assists driving of the electric bicycle 20. In one example, the motor 10 detects torque of the rear wheel caused by the user rotating the saddle, and assists the rotation of the rear wheel in accordance with the detected torque.

The motor 10 is mounted on the electric bicycle 20. In addition to motor 10, the electric bicycle 20 includes a frame 21, a handlebar 22, the front wheel 23, the rear wheel 24, a saddle 25, a crank 26, a pedal 27, a chain 28, a sprocket 29, the sprocket 30, and a stand 31. For example, the motor 10 is attached to the rear wheel 24.

The handlebar 22 is coupled forward and upward with respect to the frame 21. The orientation of the front wheel 23 with respect to the frame 21 can be manipulated with the handlebar 22. A hand of the driver of the electric bicycle 20 is placed on the handlebar 22.

The front wheel 23 is rotatably supported forward and downward of the frame 21. The front wheel 23 rotates in contact with the ground.

The rear wheel 24 is rotatably supported rearward and downward of the frame 21. The rear wheel 24 rotates in contact with the ground.

The saddle 25 is coupled to the upper center with respect to the frame 21. The driver of the electric bicycle 20 sits on the saddle 25.

The crank 26 converts a pedaling force of the driver of the electric bicycle applied to the pedal 27 into a force for driving the rear wheel 24.

The pedal 27 is disposed at one end of the crank 26. A foot of the driver of the electric bicycle 20 is placed on the pedal 27.

With rotation of the crank 26, the sprocket 29 rotates. The chain 28 hangs between the sprocket 29 and the sprocket 30. Therefore, the sprocket 29 is coupled to the sprocket 30 via the chain 28.

The stand 31 is rotatably attached to a fixed shaft of the frame 21. When the electric bicycle 20 is moved, stand 31 is rotated and held in a direction away from the ground. When the electric bicycle 20 is stopped, the stand 31 is held in a state of rotating in a direction approaching the ground and being in contact with the ground.

The front wheel 23 includes a wheel 23a and a tire 23b. The tire 23b is attached to the wheel 23a. The wheel 23a has a rim 23r having a circular shape, a hub 23h positioned at the center of the rim 23r, and a spoke 23s having a rod shape extending from the rim 23r to the hub 23h.

Similarly, the rear wheel 24 includes a wheel 24a and a tire 24b. The tire 24b is attached to the wheel 24a. The wheel 24a has a rim 24r having a circular shape, a hub 300 positioned at the center of the rim 24r, and a spoke 24s having a rod shape extending from the rim 24r to the hub 300. The hub 300 of the motor 10 described above is used as the hub of the rear wheel 24.

In the electric bicycle 20 of the present embodiment, the motor 10 is attached to the rear wheel 24. Specifically, the motor 10 is attached to the hub of the rear wheel 24. The rear wheel 24 rotates with rotation of the motor 10. Therefore, the motor 10 assists driving of the electric bicycle 20.

As illustrated in Fig. 10, the motor 10 is attached with the sprocket 30. The sprocket 30 is disposed on a side of the torque sensor 500 (Fig. 1). The first fixed shaft 610 of the motor 10 penetrates the sprocket 30. The sprocket 30 rotates with rotation of the motor 10.

In the present embodiment, the electric bicycle 20 includes the motor 10 described above, the front wheel 23, and the rear wheel 24 that rotates with rotation of the motor 10. Therefore, driving of the electric bicycle 20 can be assisted by the motor 10 including the torque sensor 500 together with the rotor 100 and the stator 200.

The motor 10 is attached to the hub of the rear wheel 24. This can easily mount the motor 10 on the electric bicycle 20.

In the present embodiment, the electric bicycle 20 includes the motor 10 described above, the front wheel 23, the rear wheel 24 that rotates with rotation of the motor 10, and the sprocket 30 attached to the rear wheel 24. The sprocket 30 faces the first fixed shaft 610. This can suppress the signal wire 450 from coming into contact with the sprocket 30.

The embodiment of the present invention has been described above with reference to the drawings (Figs. 1 to 10). The present invention is not limited to the above-described embodiment and can be implemented in various forms within a range not departing from the scope of the present invention. For easy understanding, the drawings schematically illustrate each constituent element as the subject, and the thickness, length, number, and the like of each illustrated constituent element are different from actual ones for convenience of drawing. The material, shape, dimension, and the like of each constituent element illustrated in the above-described embodiment are mere examples and are not particularly limited, and various modifications can be made without substantially departing from the scope of the present invention which is defined by the appended claims.

### Reference Signs List

- 10: motor
- 100: rotor
- 200: stator
- 300: hub
- 400: circuit board
- 450: signal wire
- 500: torque sensor
- 550: sensor wire
- 610: first fixed shaft
- 620: second fixed shaft
- 710: sun gear
- 720: planetary gear

## Claims

1. A motor (10) for assisting driving of an electric bicycle (20), said motor comprising:
a rotor (100) having a rotor shaft (160) extending along a virtual central axis, the rotor (100) rotating about the rotor shaft (160);
a stator (200) positioned radially outside with respect to the rotor (100) and including a stator core (210), an insulator (220) covering the stator core (210), a coil (230) wound around the insulator (220), and a covering portion (240) covering the coil (230);
a hub (300) that accommodates the rotor (100) and the stator (200) and rotates with rotation of the rotor (100);
a torque sensor (500) positioned on an axial one side with respect to the rotor (100);
a circuit board (400) accommodated in the hub (300) and positioned between the rotor (100) and the torque sensor (500), wherein the circuit board (400) is disposed radially inside relative to the coil (230) and faces the coil (230) in the radial direction;
a sensor wire (550) electrically connecting the torque sensor (500) and the circuit board (400);
a signal wire (450) electrically connected to an external circuit on a surface on an axial one side of the circuit board (400); and
a first fixed shaft (610) that is a stationary member and is positioned on an axial one side with respect to the rotor shaft (160), wherein
the first fixed shaft (610) supports the torque sensor (500).

2. The motor (10) according to claim 1 further comprising:
a first stator cover (260) covering an axial one side of the stator (200); and
a second stator cover (270) covering an axial other side of the stator (200), wherein
the circuit board (400) is positioned between the rotor (100) and the first stator cover (260), and
the first stator cover (260) is provided with a through hole through which the sensor wire (550) and the signal wire (450) penetrate in an axial direction.

3. The motor (10) according to claim 2, wherein
at least a part of the first fixed shaft (610) extends from the hub (300) to an axial one side,
the first fixed shaft (610) is attached with the torque sensor (500), and
the first fixed shaft (610) includes a tube portion in which the signal wire (450) is internally disposed.

4. The motor (10) according to claim 3, wherein
the first fixed shaft (610) further includes a base portion (614) coupled to the tube portion,
the base portion (614) is attached to the first stator cover (260), and
the base portion (614) is provided with a cutout continuous with a through hole of the tube portion.

5. The motor (10) according to claim 3 or 4 further comprising:
a second fixed shaft (620) that is a stationary member and is positioned on an axial other side with respect to the rotor shaft (160), wherein
at least a part of the second fixed shaft (620) extends from the hub (300) to an axial other side.

6. The motor (10) according to any one of claims 1 to 5 further comprising:
a control wire for supplying the stator (200) with a control current, wherein
the first fixed shaft (610) includes a tube portion in which the control wire is internally disposed.

7. The motor (10) according to any one of claims 1 to 6 further comprising:
a sun gear (710) attached to an axial other side with respect to the rotor shaft (160); and
a planetary gear (720) that meshes with the sun gear (710) and is disposed on an axial other side with respect to the rotor (100).

8. The motor (10) according to any one of claims 1 to 7 further comprising a one-way clutch attached to the rotor shaft (160).

9. The motor (10) according to any one of claims 1 to 8, wherein the sensor wire (550) includes:
a sensor connection line connected to the torque sensor (500),
a first connector positioned at a tip end of the sensor connection line,
a board connection line connected to the circuit board (400), and
a second connector positioned at a tip end of the board connection line and connected to the first connector.

10. An electric bicycle comprising:
the motor (10) according to any one of claims 1 to 9;
a front wheel; and
a rear wheel that rotates with rotation of the motor (10).

11. The electric bicycle according to claim 10, wherein the hub (300) of the motor (10) is the hub (300) of the rear wheel.

12. An electric bicycle comprising:
the motor (10) according to any one of claims 1 to 9;
a front wheel;
a rear wheel that rotates with rotation of the motor (10); and
a sprocket attached to the rear wheel, wherein
the sprocket faces the first fixed shaft (610).

## Patentansprüche

1. Motor (10) zum Unterstützen eines Antriebs eines Elektrofahrrads (20), wobei der Motor aufweist:
einen Rotor (100), der eine Rotorwelle (160) aufweist, die sich entlang einer virtuellen Mittelachse erstreckt, wobei sich der Rotor (100) um die Rotorwelle (160) dreht;
einen Stator (200), der radial außen in Bezug auf den Rotor (100) angeordnet ist und aufweist: einen Statorkern (210), einen Isolator (220), der den Statorkern (210) abdeckt, eine Spule (230), die um den Isolator (220) gewickelt ist, und einen Abdeckabschnitt (240), der die Spule (230) abdeckt;
eine Nabe (300), die den Rotor (100) und den Stator (200) aufnimmt und sich bei einer Drehung des Rotors (100) dreht;
einen Drehmomentsensor (500), der auf einer axialen Seite in Bezug auf den Rotor (100) angeordnet ist;
eine Leiterplatte (400), die in der Nabe (300) aufgenommen und zwischen dem Rotor (100) und dem Drehmomentsensor (500) angeordnet ist, wobei die Leiterplatte (400) radial innen relativ zu der Spule (230) angeordnet ist und der Spule (230) in der radialen Richtung zugewandt ist;
einen Sensordraht (550), der den Drehmomentsensor (500) und die Leiterplatte (400) elektrisch verbindet;
einen Signaldraht (450), der elektrisch mit einer externen Schaltung an einer Fläche auf einer axialen Seite der Leiterplatte (400) verbunden ist; und
eine erste feste Achse (610), die ein stationäres Element ist und auf einer axialen Seite in Bezug auf die Rotorwelle (160) angeordnet ist, wobei
die erste feste Achse (610) den Drehmomentsensor (500) trägt.

2. Motor (10) nach Anspruch 1, der ferner aufweist:
eine erste Statorabdeckung (260), die eine axiale Seite des Stators (200) abdeckt; und
eine zweite Statorabdeckung (270), die eine andere axiale Seite des Stators (200) abdeckt, wobei
die Leiterplatte (400) zwischen dem Rotor (100) und der ersten Statorabdeckung (260) angeordnet ist, und
die erste Statorabdeckung (260) mit einem Durchgangsloch bereitgestellt ist, welches vom Sensordraht (550) und dem Signaldraht (450) in einer axialen Richtung durchdrungen ist.

3. Motor (10) nach Anspruch 2, wobei
wenigstens ein Teil der ersten festen Achse (610) sich von der Nabe (300) zu einer axialen Seite erstreckt,
die erste feste Achse (610) an dem Drehmomentsensor (500) angebracht ist und
die erste feste Achse (610) einen Rohrabschnitt aufweist, in dem der Signaldraht (450) intern angeordnet ist.

4. Motor (10) nach Anspruch 3, wobei
die erste feste Achse (610) ferner einen Basisabschnitt (614) aufweist, der an den Rohrabschnitt gekoppelt ist,
der Basisabschnitt (614) an der ersten Statorabdeckung (260) angebracht ist und
der Basisabschnitt (614) mit einem Ausschnitt bereitgestellt ist, der mit einem Durchgangsloch des Rohrabschnitts zusammenhängend ist.

5. Motor (10) nach Anspruch 3 oder 4, der ferner aufweist:
eine zweite feste Achse (620), die ein stationäres Element ist und auf einer anderen axialen Seite in Bezug auf die Rotorwelle (160) angeordnet ist, wobei
wenigstens ein Teil der zweiten festen Achse (620) sich von der Nabe (300) zu einer anderen axialen Seite erstreckt.

6. Motor (10) nach einem der Ansprüche 1 bis 5, der ferner aufweist:
einen Steuerungsdraht zum Versorgen des Stators (200) mit einem Steuerungsstrom, wobei
die erste feste Achse (610) einen Rohrabschnitt aufweist, in dem der Steuerungsdraht intern angeordnet ist.

7. Motor (10) nach einem der Ansprüche 1 bis 6, der ferner aufweist.
ein Sonnenrad (710), das an einer anderen axialen Seite in Bezug auf die Rotorwelle (160) angebracht ist; und
ein Planetenrad (720), das mit dem Sonnenrad (710) kämmt und auf einer anderen axialen Seite in Bezug auf den Rotor (100) angeordnet ist.

8. Motor (10) nach einem der Ansprüche 1 bis 7, der ferner eine Einweg-Kupplung aufweist, die an der Rotorwelle (160) angebracht ist.

9. Motor (10) nach einem der Ansprüche 1 bis 8, wobei der Sensordraht (550) aufweist:
eine Sensorverbindungsleitung, die mit dem Drehmomentsensor (500) verbunden ist,
einen ersten Verbinder, der an einem Spitzenende der Sensorverbindungsleitung angeordnet ist,
eine Platinenverbindungsleitung, die mit der Leiterplatte (400) verbunden ist, und
einen zweiten Verbinder, der an einem Spitzenende der Platinenverbindungsleitung angeordnet und mit dem ersten Verbinder verbunden ist.

10. Elektrofahrrad, das aufweist
den Motor (10) nach einem der Ansprüche 1 bis 9;
ein Vorderrad und
ein Hinterrad, das sich bei einer Drehung des Motors (10) dreht.

11. Elektrofahrrad nach Anspruch 10, wobei die Nabe (300) des Motors (10) die Nabe (300) des Hinterrads ist.

12. Elektrofahrrad, das aufweist:
den Motor (10) nach einem der Ansprüche 1 bis 9;
ein Vorderrad;
ein Hinterrad, das sich bei einer Drehung des Motors (10) dreht; und
ein Ritzel, das an dem Hinterrad angebracht ist, wobei
das Ritzel der ersten festen Achse (610) zugewandt ist.

## Revendications

1. Moteur (10) pour aider à la conduite d'une bicyclette électrique (20), ledit moteur comprenant :
un rotor (100) présentant un arbre de rotor (160) s'étendant le long d'un axe central virtuel, le rotor (100) tournant autour de l'arbre de rotor (160) ;
un stator (200) positionné radialement à l'extérieur par rapport au rotor (100) et incluant un noyau de stator (210), un isolant (220) recouvrant le noyau de stator (210), une bobine (230) enroulée autour de l'isolant (220), et une partie de recouvrement (240) recouvrant la bobine (230) ;
un moyeu (300) qui reçoit le rotor (100) et le stator (200) et tourne avec la rotation du rotor (100) ;
un capteur de couple (500) positionné sur un premier côté axial par rapport au rotor (100) ;
une carte de circuit imprimé (400) logée dans le moyeu (300) et positionnée entre le rotor (100) et le capteur de couple (500), dans lequel la carte de circuit imprimé (400) est disposée radialement à l'intérieur par rapport à la bobine (230) et fait face à la bobine (230) dans la direction radiale ;
un fil de capteur (550) connectant électriquement le capteur de couple (500) et la carte de circuit imprimé (400) ;
un fil de signal (450) connecté électriquement à un circuit externe sur une surface sur un premier côté axial de la carte de circuit imprimé (400) ; et
un premier arbre fixe (610) qui est un élément stationnaire et qui est positionné sur un premier côté axial par rapport à l'arbre de rotor (160), dans lequel
le premier arbre fixe (610) supporte le capteur de couple (500).

2. Moteur (10) selon la revendication 1, comprenant en outre :
un premier couvercle de stator (260) recouvrant un premier côté axial du stator (200) ; et
un second couvercle de stator (270) recouvrant un autre côté axial du stator (200), dans lequel
la carte de circuit imprimé (400) est positionnée entre le rotor (100) et le premier couvercle de stator (260), et le premier couvercle de stator (260) est pourvu d'un trou traversant à travers lequel le fil de capteur (550) et le fil de signal (450) pénètrent dans une direction axiale.

3. Moteur (10) selon la revendication 2, dans lequel
au moins une partie du premier arbre fixe (610) s'étend du moyeu (300) à un premier côté axial,
le premier arbre fixe (610) est fixé au capteur de couple (500), et
le premier arbre fixe (610) inclut une partie de tube dans laquelle le fil de signal (450) est disposé intérieurement.

4. Moteur (10) selon la revendication 3, dans lequel
le premier arbre fixe (610) inclut en outre une partie de base (614) couplée à la partie de tube,
la partie de base (614) est fixée au premier couvercle de stator (260), et
la partie de base (614) est pourvue d'une découpe continue avec un trou traversant de la partie de tube.

5. Moteur (10) selon la revendication 3 ou 4, comprenant en outre :
un second arbre fixe (620) qui est un élément stationnaire et qui est positionné sur un autre côté axial par rapport à l'arbre de rotor (160), dans lequel
au moins une partie du second arbre fixe (620) s'étend du moyeu (300) à un autre côté axial.

6. Moteur (10) selon l'une quelconque des revendications 1 à 5, comprenant en outre :
un fil de commande pour alimenter le stator (200) avec un courant de commande, dans lequel
le premier arbre fixe (610) inclut une partie de tube dans laquelle le fil de commande est disposé intérieurement.

7. Moteur (10) selon l'une quelconque des revendications 1 à 6, comprenant en outre :
un planétaire (710) fixé à un autre côté axial par rapport à l'arbre de rotor (160) ; et
un satellite (720) qui engrène avec le planétaire (710) et est disposé sur un autre côté axial par rapport au rotor (100).

8. Moteur (10) selon l'une quelconque des revendications 1 à 7 comprenant en outre un embrayage unidirectionnel fixé à l'arbre de rotor (160).

9. Moteur (10) selon l'une quelconque des revendications 1 à 8, dans lequel le fil du capteur (550) inclut :
une ligne de connexion de capteur connectée au capteur de couple (500),
un premier connecteur positionné à une extrémité de pointe de la ligne de connexion de capteur,
une ligne de connexion de carte connectée à la carte de circuit imprimé (400), et
un second connecteur positionné à une extrémité de pointe de la ligne de connexion de carte et connecté au premier connecteur.

10. Bicyclette électrique, comprenant :
le moteur (10) selon l'une quelconque des revendications 1 à 9,
une roue avant ; et
une roue arrière qui tourne avec la rotation du moteur (10).

11. Bicyclette électrique selon la revendication 10, dans laquelle le moyeu (300) du moteur (10) est le moyeu (300) de la roue arrière.

12. Bicyclette électrique, comprenant :
le moteur (10) selon l'une quelconque des revendications 1 à 9,
une roue avant ;
une roue arrière qui tourne avec la rotation du moteur (10) ; et
un pignon fixé à la roue arrière, dans lequel le pignon fait face au premier arbre fixe (610).
